Europäisches Patentamt

European Patent Office

Office européen des brevets

(19)

(11) Numéro de publication: **0 091 125**
**B1**

(12) **FASCICULE DE BREVET EUROPEEN**

(45) Date de publication du fascicule du brevet: **02.09.87**

(51) Int. Cl.⁴: **H 02 K 23/54, H 02 K 23/04**

(21) Numéro de dépôt: **83103349.3**

(22) Date de dépôt: **06.04.83**

(54) **Moteur électrique à aimants permanents.**

(30) Priorité: **07.04.82 FR 8206026**

(43) Date de publication de la demande:
**12.10.83 Bulletin 83/41**

(45) Mention de la délivrance du brevet:
**02.09.87 Bulletin 87/36**

(84) Etats contractants désignés:
**CH DE FR GB IT LI**

(56) Documents cités:
**DD-A- 34 431**
**DE-C-1 074 137**
**DE-U-1 826 690**
**FR-A-1 477 322**
**US-A-3 128 404**
**US-A-3 832 581**
**US-A-4 358 693**

(73) Titulaire: **Martire, Roger**
**La Croix Dominique**
**F-46700 Puy l'Evêque (FR)**

(72) Inventeur: **Martire, Roger**
**La Croix Dominique**
**F-46700 Puy l'Evêque (FR)**

(74) Mandataire: **Casalonga, Axel et al**
**BUREAU D.A. CASALONGA OFFICE**
**JOSSE & PETIT Morassistrasse 8**
**D-8000 München 5 (DE)**

Courier Press, Leamington Spa, England.

## Description

L'invention se rapporte à un moteur électrique à aimants permanents du type à rotor plan porteur d'aimants permanents à sa périphérie et à stator porteur de bobines électriquement reliées par un dispositif de commutation sélective à une source d'alimentation en courant continu de façon à coopérer par attraction et répulsion magnétique avec les aimants du rotor. Le brevet US—A 3.832.581 décrit un moteur électrique comportant une pluralité de stators avec des bobines électromagnétiques coopérant avec une pluralité de rotors munis d'aimants permanents. Chaque rotor coopère toutefois, dans ce document avec deux stators. De plus, l'alimentation des stators se fait en courant alternatif de sorte qu'il s'agit là essentiellement d'un moteur synchrone classique.

Le brevet de la RDA DD—A—34431 décrit quant à lui un moteur comportant un seul stator associé à un seul rotor et prévoit l'utilisation de deux plaques de fermeture de flux.

La présente invention a pour objet une réalisation de moteur de ce type destiné à utiliser au mieux les avantages du recours à des aimants tout en étant simple et en se prêtant à une construction modulaire aisément adaptable aux besoins, et en particulier propre à n'exiger qu'un faible courant de démarrage la rendant intéressante pour toutes applications à alimentation par photopiles notamment. L'invention concerne un moteur électrique à aimants permanents du type à rotor plan porteur d'aimants permanents à sa périphérie et à stator porteur de bobines électriquement reliées par un dispositif de commutation sélective à une source d'alimentation en courant continu de façon à coopérer par attraction et répulsion magnétique avec les aimants du rotor, caractérisé en ce qu'il comporte une pluralité d'éléments modulaires dont chacun comprend un stator annulaire porte-bobines de part et d'autre duquel sont disposés deux rotors d'axe central commun porteur d'aimants permanents ayant entre rotors des pôles opposés en regard et sur chaque face de rotor des pôles adjacents alternés, chaque rotor étant utilisable en commun avec tout élément modulaire adjacent analogue.

D'autres aspects de l'invention apparaîtront d'ailleurs aussi dans la description suivante d'une forme de réalisation d'un tel moteur électrique, représentée à titre d'exemple au dessin annexé, dans lequel:

la fig. 1 est une vue d'ensemble avec arrachement partiel d'un moteur électrique selon l'invention;

la fig. 2 est une vue de côté d'un rotor élémentaire;

la fig. 3 est une vue de côté d'un stator élémentaire;

la fig. 4 est une vue de côté du flasque du moteur portant le dispositif de commutation des bobines de stator, représenté partiellement en coupe;

la fig. 5 est une vue extérieure de côté de l'autre flasque du moteur.

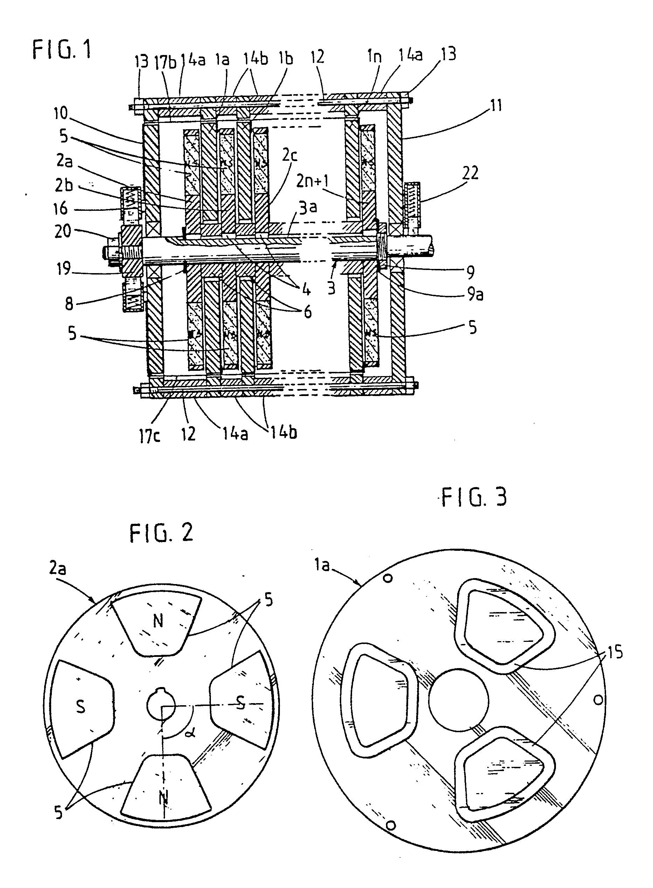

Comme on peut le voir à la fig. 1, le module de gauche comprend un stator annulaire 1a de part et d'autre duquel sont disposés deux rotors 2a, 2b ce dernier étant toutefois commun au module adjacent dont le stator annulaire est désigné par 1b et coopère également avec un second rotor 2c, et ainsi de suite jusqu'à terminer par le stator 1n et un dernier rotor 2n + 1.

Chaque rotor est constitué sous forme d'un disque plan en matériau non magnétique et non conducteur de l'électricité, et il est solidarisé avec l'arbre moteur 3, ici par clavetage en 4 dans une rainure axiale 3a de l'arbre 3. Il porte vers sa périphérie au moins une paire d'aimants permanents plats, ici deux paire d'aimants 5 comme on peut le voir à la fig. 2, qui sont encastrés dans des ouvertures correspondantes du disque et maintenus dans le plan de celui-ci par collage. Ces aimants sont disposés de sorte que sur chaque face du disque leurs pôle soit alternés (pôle nord-sud indiqué par les lettres NS). Les disques rotors, tels qu'indiqués pour les disques 2a, 2b d'un même module, sont disposés de sorte que leurs aimants aient entre eux des pôles opposés en regard et donc complémentaires du point de vue flux magnétique. Les rotors sont maintenus à l'espacement désiré sur l'arbre moteur 3 par interposition de bagues entretoises 6 et ici immobilisés sous serrage axiale entre un circlip d'arrêt 8 et un écrou freiné 9 vissable sur l'arbre moteur, à rondelles d'appui 9a.

Chaque stator est constitué sous forme d'un disque annulaire plan en matériau non magnétique et non conducteur de l'électricité, engagé avec un faible entrefer entre chaque paire de rotors, et assemblé avec les flasques 10, 11 du moteur à l'aide de tirants 12 à écrous de serrage 13 le traversant à sa périphérie, et avec interposition de bagues entretoises 14a avec les flasques et de bagues entretoises 14b entre stators, adaptées pour assurer leur positionnement correct par rapport aux rotors. Chaque stator est pourvu d'au moins une spire de fil conducteur isolé enchassée dans l'épaisseur du disque de toute manière convenable, soit ici comme on peut le voir à la fig. 3, trois bobines 15, suivant une disposition préférée selon laquelle les aimants et bobines sont respectivement prévus en nombre pair ou impair ou vice versa pour faciliter l'harmonisation des interactions aimants-bobines De préférence aussi, les bobines ont une section de spire interne correspondant à la section des aimants, chaque paire de ces derniers n'étant pas plus espacée que la valeur maximale de l'arc au centre de chaque spire ou bobine. Les aimants sont de préférence trapézoïdaux comme représenté mais pourraient aussi être triangulaires à extension radiale, ou circulaires. Les bobines 15 peuvent être pourvues d'un noyau ferro-magnétique à très faible hystérésis, mais en vue de permettre notamment un démarrage du moteur avec un très faible courant (cas d'alimentation par photopiles) elles seront alors de préférence dépourvues de noyau ou à noyau en matériau non magnétique et non conducteur de l'électricité.

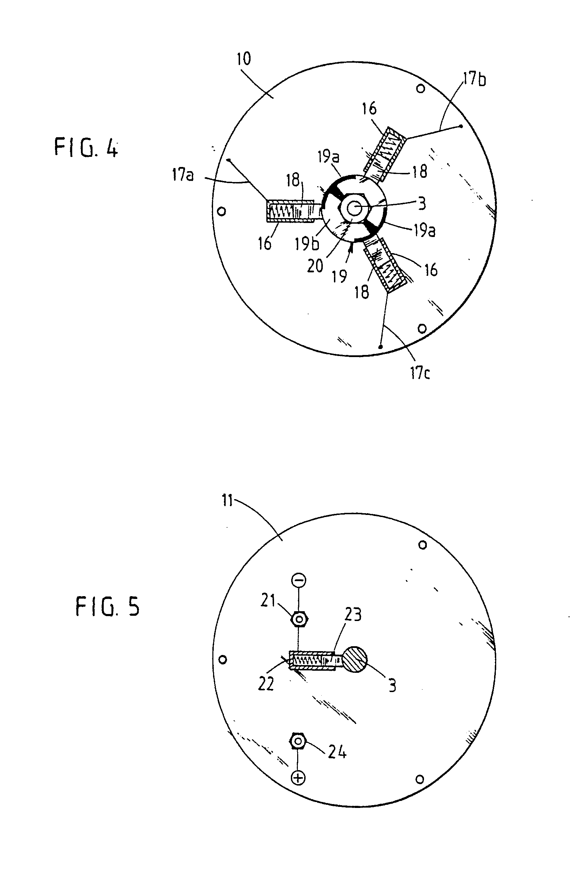

L'arbre moteur 3 est supporté par les flasques 10 et 11 avec interposition de roulements usuels. Un dispositif de commutation est interposé entre l'arbre moteur 3 et le flasque 10, ici extérieurement à celui-ci, et il comprend, comme on le voit aux fig. 1 et 4, trois porte-balais 16 respectivement connectés à des conducteurs 17a, 17b, 17c traversant les flasques 10 et les stators jusqu'au dernier et étant connectés, sur chacun de ces derniers, à l'une des bornes des trois bobines qu'il porte. Les balais 18 coopèrent avec un collecteur désigné par 19 dans son ensemble et fixé sur un embout fileté de l'arbre moteur à l'aide d'un écrou freiné 20. Ce collecteur présente un nombre de lames conductrices 19a égal au nombre de paires d'aimants 5 utilisées sur chaque rotor, ici donc 2, l'angle de commutation alpha étant indiqué par rapport aux aimants à la fig. 2. Les plagues d'intervalle 19b du collecteur sont isolantes comme la matière de celui-ci. Les lames 19a sont en conduction électrique avec l'arbre du moteur à l'autre extrémité duquel est amenée l'une des polarités d'alimentation du moteur, ici la polarité négative, sur une borne 21 portée par le flasque 11 et électriquement reliée à un porte-balai 22, dont la balai 23 est sollicité en permanence au contact de l'arbre moteur 3. Les secondes bornes d'alimentation des bobines sont ici toutes reliées à un conducteur non représenté traversant les stators comme les conducteurs 17a à 17c précités, et aboutissant à une borne d'amenée 24 de l'autre polarité d'alimentation du moteur.

Il est ainsi constitué un branchement parallèle des bobines à commutations successives contrôlées par le collecteur. Toutefois, un branchement série ou parallèle série est également possible.

Il est à voir que le dispositif de commutation classique à collecteur décrit peut tout aussi bien être remplacé dans le cadre de l'invention par un dispositif de commutation électronique statique de tout type connu destiné à éviter les étincelles de commutation.

**Revendications**

1. Moteur électrique à aimants permanents du type à rotor plan (2) porteur d'aimants permanents (5) à sa périphérie et à stator (1) porteur de bobines (15) électriquement reliées par un dispositif de commutation sélective (19) à une source d'alimentation en courant continu de façon à coopérer par attraction et répulsion magnétique avec les aimants 5 du rotor, caractérisé en ce qu'il comporte une fluralité elements modulaires dont chacun comprend un stator annulaire (1a, 1b ..) porte-bobines de part et d'autre duquel sont disposés deux rotors (2a, 2b . . .) d'axe central (3) commun porteur d'aimants permanents (5) ayant entre rotors (2) des pôles opposés en regard et sur chaque face deo rotor des pôles adjacents alternés, chaque rotor (2) étant utilisable en commun avec tout élément modulaire adjacent analogue.

2. Moteur électrique selon la revendication 1, caractérisé en ce qu'il est constitué par assemblage entretoise (6) des rotors (2a, 2b . . .) sur l'arbre du moteur (3) et par assemblage entretoise (14b) des stators annulaires (1a, 1b . . .) entre eux et avec deux flasques (10, 11) portant les paliers de l'arbre du moteur, le dispositif de commutation (19) etant interposé entre au moins l'un des flasques (10) et l'arbre (3) du moteur.

3. Moteur électrique selon la revendication 1 ou 2, caractérisé par le fait que les aimants (5) sont espacés circulairement d'une distance inférieure ou au plus égale à l'arc circulaire passant par le centre de chaque bobine (15).

4. Moteur électrique selon l'une quelconque des revendications précédentes, caractérisé par le fait que les bobines (15) et aimants (5) sont respectivement en nombre pair et impair ou vice versa.

5. Moteur électrique selon l'une quelconque des revendications précédentes, caractérisé par le fait que les bobines (15) sont alimentées par un conducteur commun traversant les flasques à leur périphérie et par un conducteur individuel (17a, 17b, 17c) passant par un porte-balai (22) du dispositif de commutation pour les bobines (15) ayant même position angulaire.

6. Moteur électrique selon l'une quelconque des revendications précédentes, caractérisé en ce que le dispositif de commutation comporte un collecteur (19) à lames sur l'arbre moteur et à porte-balais (16) relié aux bobines, les lames conductrices (19a) étant en nombre égal au nombre de paires d'aimants (5) des rotors (2) et également réparties comme elles, et le nombre de porte-balais (16) étant égal au nombre de bobines (15) par stator annulaire (1).

**Patentansprüche**

1. Elektrischer Dauermagnetmotor mit einem ebenen Rotor (2), der an seinem Umfang Dauermagnete (5) trägt, und mit einem Stator (1), der Wicklungen (15) trägt, die elektrisch über eine selektive Kommutationsvorrichtung (19) mit einer Gleichstromspeisequelle derart verbunden sind, daß sie durch magnetische Anziehung und Abstoßung mit den Magneten (5) des Rotors zusammenwirken, dadurch gekennzeichnet, daß der Motor eine Mehrzahl von modularen Elementen aufweist, die jeweils einen Wicklungen tragenden ringförmigen Stator (1a, 1b . . .) umfassen, auf dessen beiden Seiten zwei eine gemeinsame Mittelachse (3) aufweisende Rotoren (2a, 2b . . .) angeordnet sind, die die Dauermagneten (5) tragen, die zwischen den Rotoren (2) einander gegenüberliegende entgegengesetzte Pole und auf jeder Fläche des Rotors benachbarte abwechselnde Pole aufweisen, und daß jeder Rotor (2) gemeinsam mit jedem analogen benachbarten modularen Element verwendbar ist.

2. Elektrischer Motor nach Anspruch 1, dadurch gekennzeichnet, daß er durch Zusammenbau der Rotoren (2a, 2b . . .) mit Abstandsstücken auf der Welle (3) des Motors und durch Zusammenbau der ringförmigen Statoren (1a, 1b . . .) miteinander unter Beifügung von Zwischenstücken (14b) und mit zwei Flanschen (10, 11) gebildet ist, die die Lager für die Welle des Motors tragen, wobei die Kommutations-vorrichtung (19) zwischen zumindestens einem der Flansche (10) und der Welle (3) des Motors eingefügt ist.

3. Elektromotor nach Anspruch 1 oder 2, dadurch gekennzeichnet, daß die Magnete (5) kreisförmig in einem Abstand voneinander angeordnet sind, der kleiner oder gleich dem Kreisbogen ist, der durch den Mittelpunkt jeder Wicklung (15) verläuft.

4. Elektromotor nach einem der vorhergehenden Ansprüche, dadurch gekennzeichnet, daß die Wicklungen (15) und die Magnete (5) jeweils eine geradzahlige bzw. ungeradzahlige Anzahl und umgekehrt aufweisen.

5. Elektromotor nach einem der vorhergehenden Ansprüche, dadurch gekennzeichnet, daß die Wicklungen durch einen gemeinsamen Leiter, der die Flansche an ihrem Umfang durchläuft, und durch einen getrennten Leiter (17a, 17b, 17c) gespeist werden, der über einen Bürstenträger (22) der Kommutationsvorrichtung für die Wicklungen verläuft, die die gleiche Winkelposition aufweisen.

6. Elektromotor nach einem der vorhergehenden Ansprüche, dadurch gekennzeichnet, daß die Kommutatorvorrichtung einen Kollektor (19) mit Segmenten auf der Motorwelle und mit einem mit den Wicklungen verbundenen Bürstenträger (16) umfaßt, daß die leitenden Segmente (19a) in einer Anzahl vorgesehen sind, die gleich der Anzahl von Paaren von Magneten (5) des Rotors (2) ist und gleichförmig auf diese aufgeteilt sind und daß die Anzahl der Bürstenträger (16) gleich der Anzahl der Wicklungen (15) pro ringförmigem Stator (1) ist.

**Claims**

1. Electric motor with permanent magnets, of the kind having a planar rotor (2) carrying permanent magnets (5) at its periphery and having a stator (1) carrying windings (15) which are electrically connected by a selective commutator device (19) to a continuous current power supply in such a way as to cooperate by magnetic attraction and repulsion with the magnets (5) of the rotor, characterised in that it comprises a plurality of modular elements each of which comprises an annular stator (1a, 1b . . .) winding support on both sides of which are arranged two rotors (2a, 2b . . .) with a common central axis (3) carrying permanent magnets (5) having between rotors (2) opposite opposing poles, and on each face of the rotor alternate adjacent poles, each rotor (2) being able to be used in common with each analogous adjacent modular element.

2. Electric motor according to claim 1, characterised in that it is constituted by braced mounting (6) of the rotors (2a, 2b . . .) on the shaft of the motor (3) and by braced mounting (14b) of the annular stators (1a, 1b . . .) between them, and with two support plates (10, 11) carrying the bearings of the shaft of the motor, the commutator device (19) being interposed between at least one of the support plates (10) and the shaft (3) of the motor.

3. Electric motor according to claim 1 or 2, characterised by the fact that the magnets (5) are spaced in a circle at a distance which is less than, or at the most equal to, the circular arc passing through the centre of each winding (15).

4. Electric motor according to one of the preceding claims, characterised by the fact that the windings (15) and magnets (5) are in even and odd numbers respectively or vice versa.

5. Electric motor according to one of the preceding claims, characterised by the fact that the windings (15) are fed by a common conductor crossing the support plates at their periphery and by an individual conductor (17a, 17b, 17c) passing through the brush holder (22) of the commutator device for the windings (15) having the same angular position.

6. Electric motor according to one of the preceding claims, characterised in that the commutator device comprises a commutator (19) with segments on the driving shaft and with a brush holder (16) connected to the windings, the conductive segments (19a) being of an equal number to the number of pairs of magnets (5) of the rotors (2) and equally. distributed like them, and the number of brush holders (16) being equal to the number of windings (15) per annular stator (1).

FIG. 1

FIG. 2

FIG. 3

1

FIG. 4

FIG. 5